**Europäisches Patentamt**

**European Patent Office**

**Office européen des brevets**

(19)

(11) Publication number: **0 095 063**
**A2**

(12) # EUROPEAN PATENT APPLICATION

(21) Application number: **83104346.8**

(22) Date of filing: **03.05.83**

(51) Int. Cl.³: **H 05 B 1/02**

(30) Priority: **04.05.82 US 374913**

(43) Date of publication of application:
**30.11.83 Bulletin 83/48**

(84) Designated Contracting States:
**DE FR GB IT**

(71) Applicant: **Yane, Roger A.**
**9085 Freeway Drive**
**Macedonia Ohio 44056(US)**

(71) Applicant: **Yane, Daryl J.**
**9085 Freeway Drive**
**Macedonia Ohio 44056(US)**

(72) Inventor: **Yane, Roger A.**
**9085 Freeway Drive**
**Macedonia Ohio 44056(US)**

(72) Inventor: **Yane, Daryl J.**
**9085 Freeway Drive**
**Macedonia Ohio 44056(US)**

(74) Representative: **Wagner, Karl H., Dipl.-Ing.**
**P.O. Box 22 02 46 Gewuerzmuehlstrasse 5**
**D-8000 München 22(DE)**

(54) **Control system for immersion heater.**

(57) A capacitive proximity switch sensor is disposed adjacent wall means isolating the sensor from liquid in a receptacle having an immersion heater disposed therein. The proximity switch senses liquid level in the container and is operative through a relay in series with the heater to cut off power to the heater in the event liquid drops below a predetermined level. In one embodiment for use with a metallic liquid receptacle, the wall means comprises protective plastic casing about the sensor and disposed interiorly of the metal receptacle for sensing liquid. In another embodiment for use with a metallic liquid receptacle, the wall means comprises a nonmetallic tube parted to the lowest level of the receptacle and extending exteriorly thereof with the sensor adjacent the tube for sensing liquid level in the tube. In a further embodiment for use with a nonmetallic liquid receptacle, the wall means comprises the structural wall of the receptacle with the sensor disposed exteriorly thereof and closely adjacent for sensing liquid level. An optional feature includes an electrically operated drain valve energized by an operator actuated control switch with a delay timer for preventing opening of the drain valve until lapse of a predetermined time after the heater is cut off to permit the heater to cool before the liquid is drained from the receptacle.

./...

Fig.1

## CONTROL SYSTEM FOR IMMERSION HEATER

### Background of the Invention

The present invention relates to the control of immersion heaters for heating a liquid bath in a container. Certain industrial and commercial processes require immersing articles of manufacture in a liquid bath or solution maintained at a desired temperature, and employ electrical resistance-type immersion heaters suitably encased for protection against the liquid bath. The resistance heater may take the form of a flexible cable of the type described in U.S. Pat. No. 4,158,764, issued in the name of Frank Yane, or in the heater described in our co-pending application serial number 353,601 filed March 1, 1982.

Typically, where such electrical resistance-type immersion heaters are employed, a thermocouple-type temperature sensor is provided in the bath. The temperature sensor operates a control relay connected in series with the heater for cycling electric power to the heater in response to the bath temperature rising and falling above a preselected value.

In the event that liquid level drops sufficiently low as to expose portions of the heater, the heater may overheat causing damage or destruction of the heater and/or creating a chemical vapor or fire hazard. This can occur either through accidental loss of liquid in the container or through deliberate draining of the container particularly a shallow container, without cutting off power to the heater sufficiently in advance to permit the heater to cool before liquid is drained. In certain applications, it has been found convenient to provide an electrically actuated drain valve to enable remote draining of the liquid from the container by an operator. This type of arrangement, while providing greater convenience for the operator, has often resulted in the operator draining liquid from the container with power still connected to the heater, or without permitting the heater to cool after power has been disconnected from the heater.

Thus, it as been desired to find a way of providing protection of the electrical resistance heater against loss of the liquid being heated in the container. It has been particularly desired to find a way of protecting an immersion heater against loss of liquid in a container without employing additional electrical sensing devices in direct contact with the liquid bath, in order to minimize the potential for electrical shorting due to damage or breakdown of electrical insulation. It has further been desired to provide protection for an immersion heater against loss of liquid level in the container and to incorporate such protection in the control system employed for normal cycling of the heater to maintain liquid bath temperature.

## Summary of the Invention

The present invention relates to control of electrical resistance immersion heaters for heating liquid in a container, and provides a solution to the above-described problem of protecting the resistance heater from overheating in the event of loss of liquid bath from the container.

The present invention employs a resistance heater immersed in a liquid bath in a nonmetallic container in one embodiment, and a metallic container in other embodiments. In the embodiment for use with a nonmetallic container, a capacitive sensor proximity switch is disposed adjacent the exterior of the wall of the container for sensing the level of the liquid in the container. The liquid level sensor operates a relay series connected with the power leads to the resistance heater such that upon loss of liquid level in the container, the sensor causes the relay to cut off power to the resistance heater.

The proximity liquid level sensor is preferably powered by the controller employed for cycling the resistance heater for maintaining the desired temperature in the liquid bath.

In another embodiment of the invention for use with a metallic liquid bath container, a nonmetallic tube is disposed exteriorly of the container and has one end ported through the container wall adjacent the bottom of the container, with the opposite end portion of the tube disposed at the desired level of liquid in the container. The capacitive proximity sensor is disposed adjacent the portion of the tube at the desired liquid level and the isolating wall means thus comprises the tube; the level of liquid in the tube is sensed as a direct analog of the liquid level in the container.

In a still further embodiment of the invention for use with a metallic tank, the isolating wall means comprises a nonmetallic, preferably plastic liquid-tight casing received over the capacitive proximity sensor and disposed interiorly of the container at the desired liquid level.

The present invention optionally employs an electrically operated drain valve for the container which is remotely energized by an operator actuated control switch. Upon the operator moving the control switch for energizing the drain valve, a delayed timer prevents opening of the **0095063** valve until a predetermined time interval has lapsed following cut off of power to the resistance heater. This optional feature of the invention permits the resistance heater to cool for a predetermined time before liquid is drained from the container.

The present invention thus provides a unique and novel control system for an electrical resistance immersion heater for heating liquid in a nonmetallic container.

The present invention protects the heater from over-temperature in the event of loss of liquid from the container. A proximity sensor is disposed adjacent exterior wall portions of the container for sensing the liquid level in some embodiments, and is disposed interiorly of the container in one embodiment for cutting off power to the heater in the event the liquid drops below a predetermined level.

## Brief Description of the Drawings

FIGURE 1 is a schematic of the control system of the present invention for use with a nonmetallic liquid container and illustrates the electrical interconnections and the arrangements of the components;

FIGURE 2 is portion of schematic similar to FIGURE 1 and illustrates an alternate embodiment for use with a metallic liquid container; and,

FIGURE 3 is a partial section view of a further alternate embodiment for use with a metallic liquid container.

## Detailed Description

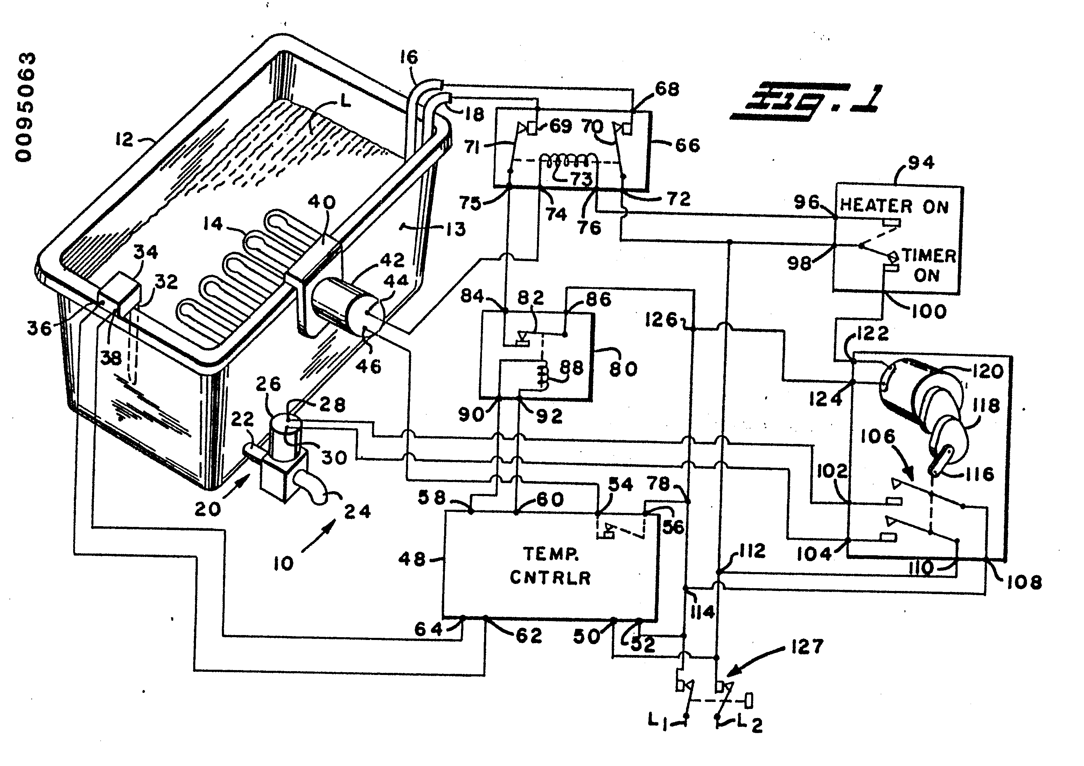

Referring now to FIGURE 1, the control system of the present invention is indicated generally at 10, as employed in connection with a nonmetallic receptacle 12 formed of a suitable plastic material such as polytetrafluroethylene (PTFE) or other material impervious to acidic or caustic attack, having a liquid bath therein extending to a predetermined level L. A resistance-type immersion heater 14 is provided in the receptacle and surrounded by the liquid bath. In the presently preferred practice, the heater 14 may be of any suitable type known in the art as, for example, the heater described in our co-pending application serial number 353,601 filed March 1, 1982. The heater 14 has a pair of insulated power leads 16, 18 extending out of the liquid bath and exteriorly of the receptacle 12 for connection thereto.

An electrically operated drain valve indicated generally at 20 has its inlet connected via pipe 22 to a port in the wall of the receptacle adjacent the bottom thereof and has an outlet 24 for discharge of the liquid from the receptacle upon energization of the valve 20. The valve 20 is actuated by a solenoid coil 26 having power lead connecting terminals 28, 30.

A thermocouple-type or other suitable temperature sensing probe 32 is provided for immersion in the liquid bath, the probe being suspended by attachment to terminal block 34 mounted on the rim of the receptacle. The terminal block has connectors 36, 38 provided thereon for electrical attachment thereto and which connect to thermocouple probe 32. However, if desired, terminal block 34 may be omitted and the thermocouple leads extended continuously out of the container.

A mounting bracket 40 is attached to the rim of the receptable or other suitable location. The bracket 40 has attached thereto a sensor 42, in the form of a capacitive proximity switch, having electrical connecting terminals 44, 46 provided

**0095063**

thereon. The sensor is, thus, isolated from the liquid in the container by nonmetallic wall means comprising the structural wall 13 of the container. In the present practice of the invention, a capacitive proximity switch manufactured by Omron, Inc., 650 Woodfield Road, Schaumburg, Illinois 60195, Model No. E2K-C25-MY1, has been found satisfactory for use as sensor 42. However, it will be understood that other capacitive proximity switches may be employed. The sensor 42 is a normally open circuit device which makes circuit continuity when the presence of liquid at the desired level is sensed. Thus, in the preferred practice, sensor 42 goes open circuit when the liquid surface falls below a predetermined level in the container.

A preferably digital proportational temperature controller 48 is provided, having power line inlet terminals 50, 52 connected respectively to opposite sides of power line leads L1, L2. In the present practice of the invention, the controller is suitable for operation on a 208 volt AC power supply. In the present practice of the invention, a controller commercially available from the aforesaid Omron and having manufacturer's Model No. ESK-S-4002A has been found satisfactory. The controller includes normally closed alarm switch terminals 54, 56 and 12 volt DC signal output terminals 58, 60. The controller 48 also has signal input terminals 62, 64 connected respectively to terminals 36, 38 of the terminal block 34 for receiving the bath temperature signal from thermocouple probe 32. It will be understood, however, that other suitable types of controlling devices may be used.

A power relay 66 has one terminal 68 of a normally open, double pole switch 70 connected to heater lead 16, with the terminal 72 of one moveable switch arm 70 connected to the

7

0095063

side L2 of the power line through an intermediate switch, as will hereinafter be described. A second moveable switch arm 71 is connected with terminal 75. A stationary contact 69 for switch 71 is connected to heater lead 18. Relay 66 has a coil 73 therein with one end thereof connected via terminal 74 to terminal 44 of the sensor with the other end of the coil connected via terminal 76 and a switch to the side L2 of the power line. The remaining terminal 46 of the sensor is connected via terminals 54 and 56 of the temperature controller to the opposite side L1 of the power line at connecting junction 78.

A temperature control relay 80 is provided and is illustrated in the drawings as having a relay coil and mechanically moveable switch arm for purposes of functional clarity. However, in the presently preferred practice, the relay 80 comprises a suitable solid-state relay capable of operation on a 12 volt DC input signal. A relay manufactured by CRYDOM Division of International Rectifier Corp., 1521 Grand Avenue, El Segundo, California 92245 bearing manufacturer's Model No. D2440 has been found satisfactory. The relay 80 has one side of the power line switch 82 connected via terminal 84 and terminal 75 of power relay switch 71 to heater lead 18 and through terminal 86 to side L1 of the power line thereby completing the circuit to heater 14. The relay coil 88 is series connected through terminals 90, 92 respectively to the signal output terminals 58, 60 of the temperature controller.

A manual power control switch 94 is provided and is series connected via terminals 96, 98 to side L2 of the power line. The switch 94 is preferably a single pole, single throw switch for manual operator actuation. Switch 94 has one position,

interconnecting terminals 96, 98 indicated as "heater on" in FIGURE 1, and a second circuit position indicated by "timer on" in FIGURE 1. The second position is adapted for external circuit connection, via terminal 100, for purposes as will hereinafter be described with respect to an optional feature of the invention.

In normal operation, the temperature controller receives a signal from thermocouple 32 through terminal 62, 64 upon the liquid rising above or falling below the desired temperature. A corresponding output signal is provided at terminals 58, 60 for actuating relay 80 to open and close switch 82 for cycling heater 14 to maintain the desired temperature in the bath.

With normal liquid level in container 12 normally open sensor switch becomes closed, thereby energizing coil in relay 66, which causes normally open switches 70, 71 to close, thus completing the power circuit to heater 14.

In the event of loss of liquid in the container, either by accident or by opening of drain valve 20, upon the liquid dropping below a predetermined level, sensor 42 opens the circuit via normally closed switch terminals 54, 56 of the temperature controller from junction 78 on side L1 of the power line, through relay coil 73, and the first position of switch 94, to side L2 of the power line. The cutting of of current to the coil 73 of relay 66 electromagnetically deactivates switches 70, 71 to move to the open position, thereby breaking the power circuit to lead 16 and 18 of the immersion heater 14. In the control system of the present invention, manual switch 94 switches only the current of relay coil 73, rather than the current to heater 14 which is substantially greater.

Drain valve 20 has its solenoid coil terminals 28, 30 connected respectively to stationary switch contact terminals 102, 104 of preferably a double-pole, single- throw switch indicated generally at 106. The moveable arms of switch 106 are connected respectively through terminals 108, 110 to opposite sides of power lines L1, L2 at junctions 112, 114.

An optional feature of the invention will now be described wherein a switch indicated generally at 106 is connected to an actuator 116 which actuator is operated by a gear train 118 driven by timing motor 120. The timing motor is series connected through terminals 122, 124, to junction 126 of power lead L1 and to power lead L2 through auxillary position terminal 100 of switch 94. If desired timer 120 and switch 106 may be a state device.

The optional feature of the invention is operated when manual switch 94 is moved to the second or "timer on" position for purposes of activating the drain valve 20. In the "timer on" position, switch 94 cuts off coil 73 of relay 66 and applies power to the timing motor 122 which is operated to move actuator 116 after a predetermined time delay for closing switch 106 to energize the drain valve 20 for draining liquid from the container. In the presently preferred practice of the invention, the time delay interval of the timer 120 is chosen so as to permit the heater 14 to cool down to a temperature low enough to permit the liquid to be drained to a level exposing the heater without resulting in over-temperature or damage to the heater.

The optional feature of the invention, thus, automatically delays energization of the drain valve u resistance heater 14 has had an opportunity to cool. switch 94 may be located at a suitable position remot

0095063

remaining portions of the control system, the operator is, therefore, encouraged to use switch 94 to disconnect the heater and energize the drain valve, thereby employing the automatic time delay for closing switch 106 and draining the receptacle.

If desired, a manually operated preferably double-pole line power switch indicated generally at 127 may be provided for complete system shutdown.

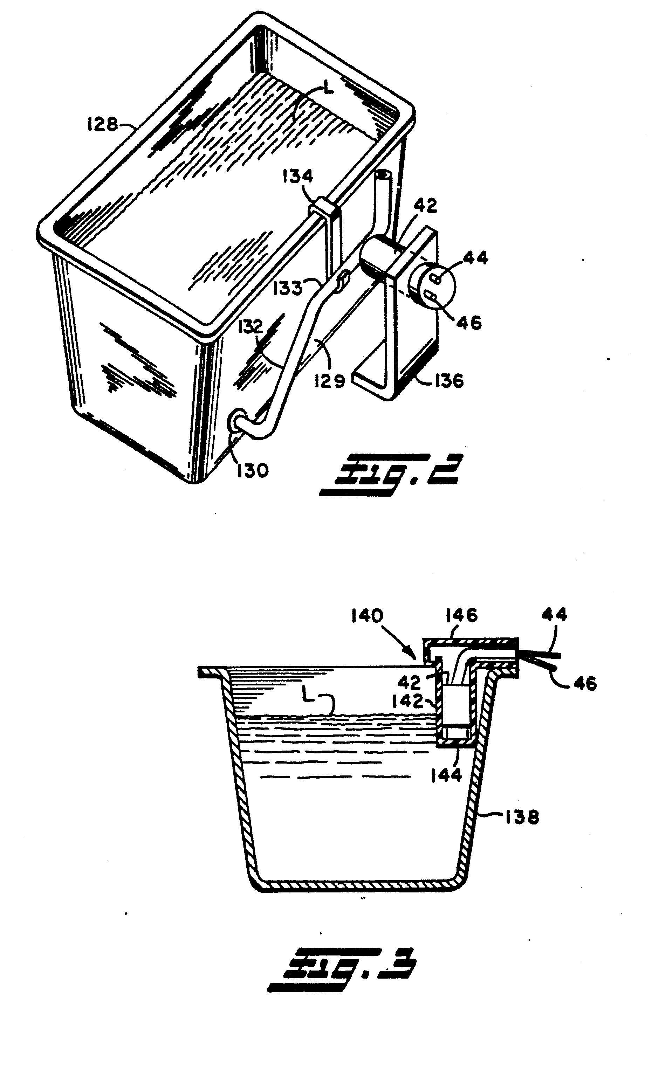

Referring now to FIGURE 2, another embodiment of the invention for use with a metallic liquid container 128 is illustrated. Metal tank 128 has a fluid port 130 formed through the structural wall 129 thereof adjacent the bottom of the tank, for permitting communication with the lowest level of liquid denoted "L" therein.

A nonmetallic tube 132 formed preferably of a suitable plastic impervious to caustic and acidic solutions, has one end thereof connected to port 130 in a fluid-tight connection, permitting liquid from the interior of the container to seek its own level in tube 12. Tube 132 is disposed exteriorly of tank wall 129 such that the free end of the tube is above the dsired level of liquid in the tank, and a portion 133 adjacent the free end is arranged preferably horizontally at height above the tank bottom representing the desired liquid level.

The horizontal portion 133 of the tube is maintained in the desired position by any suitable expedient as, for example, bracket 134 received over the rim of tank 128.

Capacitive proximity sensor 42 is disposed closely adjacent the horizontal portion 133 which comprises a nometallic wall means isolating tank liquid from the sensor in the embodiment of FIGURE 2. The sensor 42 is supported in the position shown in FIGURE 2 by a suitable stanchion or bracket 136

0095063

In operation, the liquid from the tank enters tube 132 through port 130 and seeks a level in the tube which is a direct analog of liquid level in the tank 128. When the liquid enters horizontal portion 133, it causes sensor 42 to power up the heater relay 66 (see FIGURE 1) and when fluid flows out of portion 133, sensor 42 deactivates relay 66.

Referring now to FIGURE 3, another embodiment of the invention for use with a metallic tank 138 is illustrated wherein the nometallic wall means isolating the sensor from the liquid bath "L" comprises a preferably plastic casing or housing indicated generally at 140.

The housing 140 is preferably formed of a tube portion 142 disposed interiorly of tank 138 in generally vertical arrangement having a lower end 144 closed in fluid-tight integrity.

Casing 140 has an upper attachment portion 146 having the upper end of tube 142 received therein and portion 146 is attached to the rim of the tank in any convenient manner for positioning.

Sensor 42 is received in tube 142 with leads 44, 46 extending exteriorly of the tank through an opening in upper portion 146.

In the presently preferred practice, casing 140 is a chemically resistant plastic capable of weldment for fluid-tight sealing of the interconnections of portions 142, 144 and 146. Two such plastics which have been found satisfactory are polypropylene and polyvinylidenfluoride (PVDF); however, it will be understood that other suitable nonmetallic materials may be employed, if desired.

Although the invention has herein above been described in the presently preferred practice, it will be understood to those having ordinary skill in the art that modifications and variations may be made to the above described embodiments and the invention is limited only by the following claims.

WHAT IS CLAIMED IS:

1. A control system for an immersion heater comprising:

    a. a receptacle containing a liquid bath, said receptacle being formed of nonmetallic material;

    b. an electrical resistance heater immersed in said bath;

    c. temperature sensing means for sensing the temperature of the liquid bath upon connection of said heater to a source of electrical power;

    d. temperature switch means operated in response to a signal from said sensor means to disconnect and reconnect said heater means from said source of power.

    e. control switch means electrically in series with said heater means;

    f. capacitive sensor means disposed externally of said receptacle and operative to detect the liquid level in said container; and,

    g. said control switch means being operative in response to a signal from said capacitive sensor means to disconnect said power source from said heater means.


2. The control system defined in claim 1, further comprising:

    a. drain valve means operative upon actuation to permit said liquid to drain from said receptacle;

    b. actuator means operative upon energization to open said drain valve;

c. switch means operative to connect said actuator means to a source of power for energization;

d. drain switch means operative upon operator movement to disconnect said heater from said source of power; and,

e. time delay means operative upon movement of said drain switch means to prevent energization of said actuator means for a predetermined interval after said heater means is disconnected from said source of power.

3. A control system for an immersion heater operative upon connection to a source of power to heat liquid in a nonmetallic container comprising:

a. switch means electrically in series with said heater and operative upon actuation and deactuation for respectively disconnecting and reconnecting said heater to said power source;

b. temperature sensing means disposed to sense the temperature of said liquid and operative upon sensing liquid temperature above a predetermined value to actuate said switch means for disconnecting said heater from said source of power, and,

c. capacitive means disposed adjacent the exterior wall of said container and operative upon the liquid dropping below a predetermined level to actuate said switch means for disconnecting said heater from said source of power.

4. The control system defined in claim 3, further comprising drain valve means operative upon operator actuation to drain the liquid from said receptacle.

5. The control system defined in claim 3 further comprising:

    a. drain valve means operative upon operator actuation to drain the liquid from said receptacle; and,

    b. time delay means operative upon said operator actuation to delay opening of said drain for a predetermined interval of time.

6. The control system defined in claim 3 wherein said capacitive means comprises a capacitive proximity switch means.

7. The control system defined in claim 3 further comprising;

    a. electrically operated drain valve means;

    b. switch means series connected with said drain valve means;

    c. timer means operative upon energization to actuate and deactuate said switch means; and

    d. a control switch means moveable by the operator for energizing said timer means.

8. The control system defined in claim 3 wherein said switch means included relay means for disconnecting the power current for said heater.

9. A control system for an immersion heater for heating liquid in a container comprising:

    a. temperature sensing means immersed in said liquid and having lead means extending exteriorly of the liquid for electrical connection thereto;

b.   temperature controller means including switch means series connecting said heater with a source of power, said controller operative upon the sensor sensing liquid temperature above or below a preselected temperature, to open and close said switch means for cycling said heater to regulate said liquid about said preselected temperature; and,

c.   proximity sensor means disposed to sense liquid level in said container, said proximity sensor being operative to actuate said switch means to cut off power to said heater when the level of liquid in said container falls below a desired level; and,

d.   nonmetallic wall means isolating said proximity sensor means from the liquid in said container.

10.   The system defined in claim 9, wherein said wall means comprises the structural wall of said container.

11.   The system defined in claim 9, wherein said nonmetallic wall means comprises portions of a nonmetallic tube disposed exteriorly of said container and ported to said container to receive liquid therefrom in said tube.

12.   The control system defined in claim 9, wherein said nonmetallic wall means comprises a fluid-tight casing having said sensor received therein and disposed interiorly of said container

0095063

Fig. 1

_Fig. 2_

_Fig. 3_